# FASCICULE DE BREVET EUROPEEN

(11) **EP 3 190 004 B1**
(45) Date de publication et mention de la délivrance du brevet: **29.04.2020**
(21) Numéro de dépôt: 17150322.0
(22) Date de dépôt: 04.01.2017
(51) Int. Cl.: B60Q 1/00, F21S 41/19, F21S 43/19, F21S 43/237, F21S 45/00, F21S 41/141, F21S 43/14

(54) **DISPOSITIF DE GUIDAGE DE CÂBLES POUR UN DISPOSITIF LUMINEUX D'UN VÉHICULE AUTOMOBILE**
KABELFÜHRUNGSVORRICHTUNG FÜR EINE LEUCHTVORRICHTUNG EINES KRAFTFAHRZEUGS
DEVICE FOR GUIDING CABLES FOR A LIGHT DEVICE OF A MOTOR VEHICLE

(30) Priorité: 05.01.2016 FR 1650057
(43) Date de publication de la demande: 12.07.2017
(73) Titulaire: Valeo Iluminacion, 23600 Martos (ES)
(72) Inventeur: MADORRAN TIL, Gonzalo, 23600 Martos (ES); RUIZ, Francisco, 23600 Martos (ES); FERNANDEZ, Ricardo, 23600 Martos (ES); PASTOR, Ramon, 23600 Martos (ES); CABANNE, Damien, 23600 Martos (ES); MORENO, Juan-Francisco, 29620 Torremolinos (ES); DE-LA-TORRE, Manuel, 23600 Martos (ES)

(56) Documents cités:
- EP-A1- 2 266 845
- WO-A1-2015/127411
- DE-A1-102006 020 959

## Description

L'invention concerne le domaine du guidage de câbles électriques, notamment dans un dispositif d'éclairage et/ou de signalisation pour un véhicule automobile. Dans de tels dispositifs, l'espace restreint disponible forme une contrainte de conception importante.

Dans le domaine des dispositifs d'éclairage et/ou de signalisation pour un véhicule automobile, il est devenu courant d'utiliser des technologies lumineuses à semi-conducteurs, tels que des diodes électroluminescentes, LED, par exemple. De manière connue, de telles sources lumineuses sont alimentées par le biais de moyens de pilotage de l'alimentation, comprenant notamment un élément convertisseur, apte à convertir un courant électrique d'une première intensité, fourni par une source de courant interne au véhicule telle qu'une batterie, en un courant électrique d'une intensité différente, adaptée à alimenter les LEDs.

Il va de soi que ce genre de dispositif fait recours à une pluralité de composants électroniques interconnectés et souvent déportés les uns par rapport aux autres à cause de l'espace restreint disponible pour les loger. Les composants sont reliés par des câbles électriques souvent regroupés en harnais.

Afin de guider les câbles dans de tels dispositifs lumineux, il a été proposé, par exemple dans le document de brevet EP 2266845, d'utiliser un dispositif de guidage des câbles.

A part des éléments électroniques nécessaires, il devient de plus en plus courant dans de tels dispositifs d'éclairage et/ou de signalisation d'utiliser des moyens optiques, par exemple des guides de lumière, aptes à diriger des rayons lumineux entrant par une face d'entrée vers une face de sortie. Il en résulte un besoin accru d'alignement des composants électroniques et optiques respectifs par rapport aux câblages associés et à la géométrie de l'espace disponible.

Le document WO 2015/127411 montre un dispositif de maintien d'un guide lumière et d'une carte de circuit imprimé.

L'invention a pour objectif de pallier à au moins un des problèmes posés par l'art antérieur. L'invention propose à cet effet un dispositif de guidage de câbles, un dispositif lumineux équipé d'un tel dispositif de guidage, ainsi qu'un procédé d'assemblage d'un tel dispositif lumineux.

L'invention a pour objet un dispositif de guidage selon les caractéristiques de la revendication 1 pour guider au moins un câble dans un dispositif lumineux pour un véhicule automobile. Le dispositif de guidage comprend une structure rigide qui s'étend le long d'au moins une direction de guidage et comprend des moyens de fixation destinés à fixer le câble à la structure. Le dispositif est remarquable en ce que la structure comprend des premiers moyens de réception destinés à loger une carte de circuit imprimé.

La carte de circuit imprimé peut de préférence comprendre une carte du type PCB (« Printed Circuit Board »), et/ou une carte de circuit imprimé flexible, notamment du type FPCB (« Flexible Printed Circuit Board »), et/ou un dispositif d'interconnexion à géométrie variable, notamment du type MID (« Molded Interconnect Device »)

La rigidité de la structure est de préférence telle que la structure n'est pas pliable.

Le dispositif lumineux peut de préférence être un dispositif d'éclairage et/ou de signalisation pour un véhicule automobile.

Selon l'invention, les premiers moyens de réception comprennent au moins une fente définie dans la structure, la fente ayant une largeur adaptée à y loger l'épaisseur d'une carte de circuit imprimé. De préférence, la fente peut avoir une largeur allant de 1 mm à 5 mm.

La structure peut de préférence comprendre des deuxièmes moyens de réception destinés à recevoir des moyens optiques d'un dispositif lumineux pour un véhicule automobile. La structure peut de préférence comprendre une pluralité de tels deuxièmes moyens de réception.

La structure peut comprendre une pluralité de moyens de réception destinés à recevoir des composants divers d'un dispositif d'éclairage et/ou de signalisation pour un véhicule.

Les deuxièmes moyens de réception peuvent de manière préférentielle comprendre une ouverture formée dans une paroi de la structure.

De préférence, la structure peut comprendre plusieurs parties qui peuvent optionnellement s'étendre chacune le long d'une direction de guidage différente.

La structure peut de préférence présenter, le long des directions de guidage, une section transversale à profil généralement en forme de U.

Alternativement la section transversale présente un profil généralement en forme de L ou de T. Ces formes de profil augmentent la rigidité de la structure et permettent l'utilisation de guidage.

Dans un mode de réalisation complémentaire, le dispositif comprend au moins un couvercle de manière à fermer un profil en U, en L ou en T, sur tout ou partie du profil

Alternativement, le profil peut être un profil fermé.

De préférence les moyens de fixation peuvent être situés dans le fond du profil en U, en L ou en T.

Les moyens de fixation peuvent comprendre des clips de fixation.

De manière préférentielle, la structure rigide peut comprendre des moyens destinés à fixer le dispositif à une paroi interne d'un dispositif lumineux pour un véhicule automobile.

La structure rigide est de préférence en matière plastique, par exemple en polypropylène, PP. De préférence, les premiers moyens de réception de la carte de circuit imprimé et/ou les deuxièmes moyens de réception sont venus de matière avec la structure rigide définissant les directions de guidage. De préférence, l'ensemble de la structure rigide y compris les divers moyens de réception est produit par un procédé de moulage.

L'invention a également pour objet un dispositif lumineux pour un véhicule automobile comprenant une carte de circuit imprimé et une pluralité de câbles électriques. Le dispositif est remarquable en ce qu'il comprend un dispositif de guidage conforme à l'invention. La carte de circuit imprimé est logée dans les premiers moyens de réception du dispositif de guidage et au moins un des câbles est fixé à la structure rigide.

Au moins un des câbles fixés à la structure rigide peut de préférence être relié électriquement à un circuit électronique supporté par la carte de circuit imprimé.

De préférence, la carte de circuit imprimé peut comprendre un circuit électronique ayant au moins une source lumineuse.

De préférence, la carte de circuit imprimé peut comprendre un dissipateur thermique.

Préférentiellement, le dispositif peut comprendre des moyens optiques destinés à guider les rayons lumineux émis par l'au moins une source lumineuse pour former un faisceau lumineux. Les moyens optiques peuvent de préférence comprendre un guide de lumière ayant une face d'entrée et une face de sortie.

Un guide de lumière ou guide lumineux est une pièce optique apte à guider de la lumière par réflexion interne totale de cette lumière, par exemple d'une zone d'entrée à une zone de sortie. Un guide lumineux peut comprendre une nappe de guidage ou alternativement une fibre optique.

La nappe de guidage, est un guide dont l'épaisseur est faible au regard de sa longueur et de sa largeur. Elle peut être incurvée et présenter un galbe donné. Ainsi la nappe présente deux faces étendues séparée par un pourtour, ce pourtour définissant une épaisseur de la nappe, qui peut être variable, par exemple diminuant d'une extrémité à l'autre. Ces faces étendues forment des faces de guidage délimitant une zone de propagation des rayons lumineux, par réflexion interne sur ces faces.

Les moyens optiques peuvent de préférence comprendre une ou une pluralité de lentille(s) et/ou une ou une pluralité de réflecteurs.

Les moyens optiques peuvent de préférence être reçus par les deuxièmes moyens de réception de la structure rigide.

De manière préférée, les premiers moyens de réception pour la carte de circuit imprimé et les deuxièmes moyens de réception pour les moyens optiques peuvent être disposés sur la structure rigide de façon à ce que la lumière émise par au moins une source lumineuse de la carte de circuit imprimé peut être guidée par les moyens optiques.

La source lumineuse peut de préférence comprendre un élément émetteur à semi-conducteur. De préférence, la source lumineuse peut comprendre une diode électroluminescente, LED, une diode électroluminescente de puissance, ou une diode laser.

L'invention a également pour objet un procédé d'assemblage d'un dispositif lumineux pour un véhicule automobile. Le procédé est remarquable en ce qu'il comprend les étapes de :
- mise à disposition d'un dispositif de guidage conforme à l'invention ;
- fixation d'au moins un câble électrique à la structure rigide, de manière à guider le câble le long d'une direction de guidage définie par la structure rigide;
- fixation d'une carte de circuit imprimé à la structure rigide à l'aide des premiers moyens de réception ;
- montage du dispositif de guidage, y compris des câbles et de la carte de circuit imprimé fixés à celui-ci, au sein du dispositif lumineux.

Le procédé peut de préférence comprendre une étape de fixation d'au moins un moyen optique, par exemple un guide de lumière, à la structure rigide, à l'aide d'au moins un des deuxièmes moyens de réception, l'étape étant préalable à l'étape de montage.

Grâce aux mesures de la présente invention, la conception et l'assemblage de dispositifs lumineux tels que des dispositifs d'éclairage et/ou de signalisation pour un véhicule automobile, sont simplifiés. Dans l'exemple d'un projecteur avant d'un véhicule automobile, l'espace disponible pour monter la pluralité de composants nécessaires au bon fonctionnement du feu peut être mieux utilisé en utilisant le dispositif de guidage selon l'invention. En particulier, le fait d'associer la fonction de guidage de câbles aux fonctions de support pour une pluralité de composants, permet de s'affranchir de moyens de support dédiés par composant. En plus, les composants peuvent être alignés de manière rigoureuse et reproductible les uns par rapport aux autres avant de les intégrer au projecteur. Ceci est particulièrement intéressant dans le cas d'un guide de lumière qui doit être aligné par rapport à l'emplacement d'une source de lumière, par exemple une diode électroluminescente, LED, implantée sur une carte de circuit imprimé. En prévoyant les moyens de réception du guide et de la carte de circuit imprimé en question à des endroits prédéterminés du dispositif selon l'invention, cet alignement ne pose plus de problèmes. En plus, les câbles assurant les connexions électriques des différents composants sont guidés de manière prédéterminée à l'aide du dispositif selon l'invention.

D'autres caractéristiques et avantages de la présente invention seront mieux compris à l'aide de la description exemplaire et des dessins parmi lesquels :
- la figure 1 montre une première vue en perspective d'un mode de réalisation préféré du dispositif selon l'invention ;
- la figure 2 montre une deuxième vue en perspective d'un mode de réalisation préféré du dispositif selon l'invention.

Sauf indication spécifique du contraire, des caractéristiques techniques décrites en détail pour un mode de réalisation donné peuvent être combinés aux caractéristiques techniques décrites dans le contexte d'autres modes de réalisation décrits à titre exemplaire et non limitatif.

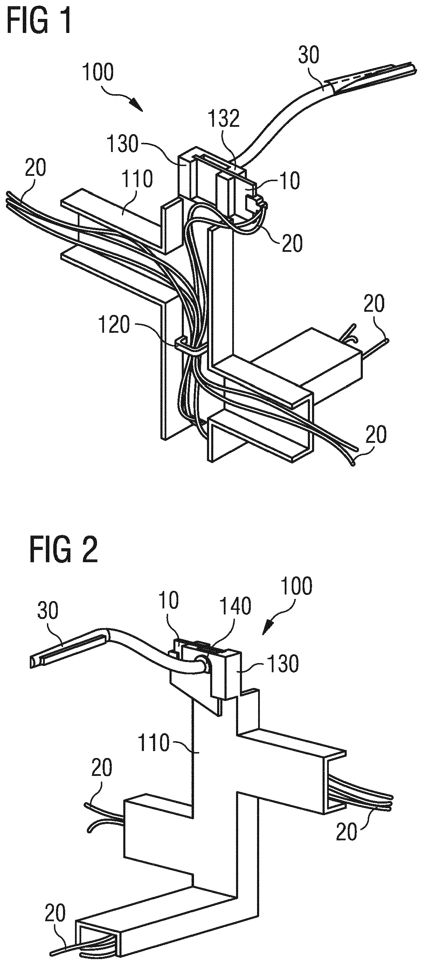

La figure 1 montre un dispositif 100 pour guider au moins un câble dans un dispositif d'éclairage et/ou de signalisation pour un véhicule automobile, dans un mode de réalisation préféré. A titre illustratif, une carte de circuit imprimé 10, des câbles 20 et un guide lumière 30 sont également montrés, cependant ces composants ne font pas partie du dispositif de guidage 100.

Dans la présente invention, on entend par « câble électrique » un ou plusieurs élément(s) électriquement conducteur(s) allongé(s) entouré(s) par au moins une couche électriquement isolante, la couche électriquement isolante pouvant être directement en contact physique avec le ou les éléments électriquement conducteur(s) allongé(s).

Le câble électrique comprend classiquement un axe longitudinal.

L'élément électriquement conducteur allongé constitutif du câble électrique de l'invention est classiquement destiné à distribuer le courant électrique entre différents dispositifs électriques, notamment à distribuer le courant électrique à au moins un module lumineux de véhicule automobile. Plus particulièrement, le câble électrique de l'invention est destiné à être connecté, ou est connecté, à au moins un module lumineux de véhicule automobile.

L'élément électriquement conducteur allongé du câble électrique peut être typiquement un fil métallique ou une pluralité de fils métalliques, torsadé(s) ou non, notamment en cuivre et/ou en aluminium (au degré d'oxydation zéro), ou un de leurs alliages. De préférence, l'élément électriquement conducteur allongé du câble électrique est en cuivre (au degré d'oxydation zéro).

A titre d'exemple, le câble électrique peut comprendre un ou plusieurs fils électriques isolés, entouré(s) ou non par une gaine de protection.

Les câbles guidés ne font pas partie de l'objet de la présente invention.

Le dispositif de guidage 100 comprend une structure rigide 110 qui définit un squelette de guidage. Dans l'exemple montré, une partie de guidage verticale de la structure relie deux parties de guidage perpendiculaires à celle-ci à deux hauteurs différentes. Une troisième partie de guidage de la structure est perpendiculaire aux trois parties de guidage décrites précédemment. Il va de soi que l'invention n'est pas limitée à cette géométrie. En effet chaque partie de guidage de la structure rigide 110 définit une direction de guidage d'un ou de plusieurs câbles électriques, qui peuvent être regroupés en harnais. Selon l'application visée, les directions de guidage peuvent être différentes de celles illustrées et évidemment les parties de guidage de la structure peuvent alors être prévues de manière à correspondre aux directions de guidage nécessaires, sans pour autant sortir du cadre de l'invention. En particulier les parties de guidage peuvent être courbées selon au moins une direction, de manière à prendre des formes tridimensionnelles complexes.

Le profil transversal de chaque partie de guidage présente une forme en U ou en C, dépendant de l'orientation de l'observateur par rapport au dispositif 100. Le fond et les parois de la forme en U définissent un canal dans lequel les câbles guidés sont reçus. Il peut être prévu de fournir un couvercle adapté à fermer la face ouverte du profile. Un tel couvercle peut être fixé sur le support rigide 110 par des moyens en soi connus dans l'art. Dans un mode de réalisation alternatif, le profil transversal de chaque partie de guidage présente une forme en T ou en L. Dans un mode de réalisation alternatif, le profil peut avoir une allure fermée, définissant un tube fermé plutôt qu'un canal ouvert.

Dans l'exemple de la figure 1, le fond du profil en U comprend des moyens de fixation mécanique 120 destinés à fixer un ou plusieurs câbles au support 110. Une pluralité de moyens de fixation similaires est de préférence prévue le long des directions de guidage définies par les différentes parties du support. A titre exemplaire, les moyens de fixation sont réalisés par des clips de fixation. D'autres moyens de fixation aptes à fixer un ou plusieurs câbles sur une partie de leur longueur au support 110 seront à la portée de l'homme du métier.

Le dispositif 100 comprend également des premiers moyens de réception 130 destinés à loger une carte de circuit imprimé 10. Ces moyens de réception peuvent être fournis sous la forme d'un boîtier, ou, comme dans l'exemple illustré, sous la forme d'une fente 132 arrangée dans une paroi du support 110. Les dimensions du boîtier ou de la fente sont telles qu'elles permettent d'y installer une carte de circuit imprimé. Il peut s'agir d'une carte de circuit imprimé de type PCB, FPCB, MID ou autre. L'envergure de la fente peut par exemple correspondre sensiblement à l'épaisseur de la carte de circuit imprimé. Par exemple, lorsque la fente présente une section rectangulaire, l'envergure correspondra à la largeur de la section rectangulaire. On entend par « sensiblement à l'épaisseur » que la dimension inclue l'épaisseur de la carte et une tolérance d'au plus ou égale à 500 µm, de préférence inférieure ou égale à 200 µm. Evidemment, le dispositif peut comprendre une pluralité de tels moyens de réception, destinés à loger une pluralité correspondante de cartes de circuit imprimé.

La carte de circuit imprimé 10 illustrée comprend des composants électroniques et notamment au moins une source lumineuse, par exemple une diode électroluminescente. L'emplacement des premiers moyens de réception 130 sur le support ou la structure rigide est choisi en fonction de l'emplacement requis de la source lumineuse au sein du dispositif lumineux qui est destiné à être équipé du dispositif de guidage 100. Le harnais de câbles 20 peut par exemple correspondre à un harnais d'alimentation qui relie la LED de la carte de circuit imprimé 10 à une source d'alimentation électrique. Alternativement, la ou les sources lumineuses du dispositif lumineux peuvent être placées sur un élément de dissipation thermique du dispositif lumineux et connectées électriquement, par exemple par pontage de type « wire bonding » à un circuit électrique de la carte de circuit imprimé, le circuit électrique réalisant par exemple la fonction de pilotage de l'alimentation de la ou des sources lumineuses.

La figure 2 reprend le dispositif de guidage 100 de la figure 1, mais on y montre la face opposée. On y perçoit notamment la face externe du fond du profil en U de la structure rigide 110. Dans ce mode de réalisation préféré, le dispositif de guidage comprend en outre des deuxièmes moyens de réception 140 visibles sur la figure 2. Les deuxièmes moyens de réception 140 sont destinés à recevoir un guide de lumière 30. De tels guides sont en soi connus dans l'art. Ils présentent une face d'entrée par laquelle des rayons lumineux entrent dans un milieu de propagation au sein du guide. Les rayons sont propagés vers une face de sortie. Dans l'exemple illustré, il est important que la face d'entrée soit alignée à l'emplacement d'une LED de la carte de circuit imprimé 10, pour que les rayons émis par la LED puissent entrer dans le guide de lumière 30 par sa face d'entrée. C'est pourquoi les deuxièmes moyens de réception 140 comprennent une ouverture dans une paroi de la structure 110, correspondant à l'emplacement de la LED en question lorsque la carte de circuit imprimé 10 est logée dans les premiers moyens de réception 130. Dans l'exemple montré, il s'agit d'une ouverture circulaire de diamètre sensiblement égal au diamètre extérieur du guide de lumière 30, de façon à ce que ce dernier peut s'insérer au niveau de sa face d'entrée dans l'ouverture. D'autres moyens de fixation, par exemple des liaisons par interférence, sont envisageables sans pour autant sortir du cadre de l'invention. L'alignement relatif nécessaire des composants 10, 20 et 30 étant connu au préalable, les moyens de réception du dispositif 100 sont prévus à des emplacement prédéterminés lors de la fabrication du dispositif. Ainsi l'assemblage rapide des composants sur le support 110 résulte inévitablement dans l'alignement correct requis.

Bien que l'exemple concret d'un guide de lumière à aligner par rapport à une source lumineuse vienne d'être donné, il va de soi que d'autres composants d'un dispositif lumineux peuvent être supportés par des moyens de réception prédéterminés intégrés au dispositif de guidage 100. De préférence tous les moyens de réception prévus 130, 140 sont venus de matière avec les parties de guidage de la structure rigide 110. Ceci peut être réalisé en moulant le dispositif 100 d'un tenant. Le dispositif est de préférence produit en matière plastique telle que le polypropylène, PP. Des procédés de moulage en utilisant des inserts de moulage appropriés sont bien connus dans l'art et peuvent être adaptés par l'homme du métier selon la géométrie visée du dispositif 100.

Dans tous les modes de réalisation, le dispositif 100 comprend avantageusement des moyens qui assurent sa fixation à au moins une paroi interne d'un dispositif d'éclairage et/ou de signalisation. Il s'agit par exemple de trous prévus pour visser le dispositif à des endroits prédéterminés de la structure rigide. Alternativement, il s'agit de clips de montage, qui coopèrent avec des structures homologues de la paroi en question.

Lors de l'assemblage d'un dispositif lumineux, une fois que tous les composants nécessaires 10, 20, 30 sont montés sur le dispositif 100, l'ensemble est installé dans le dispositif lumineux en question.

## Revendications

1. Dispositif de guidage (100) pour guider au moins un câble dans un dispositif lumineux pour un véhicule automobile, ledit dispositif de guidage comprenant une structure rigide (110) qui s'étend le long d'au moins une direction de guidage et comprenant des moyens de fixation (120) destinés à fixer le câble à la structure, la structure (110) comprenant des premiers moyens de réception (130) destinés à loger une carte de circuit imprimé, et
les premiers moyens de réception (130) comprenant au moins une fente (132) définie dans la structure (110), la fente ayant une largeur adaptée à y loger l'épaisseur de la carte de circuit imprimé.

2. Dispositif de guidage selon la revendication 1, **caractérisé en ce que** la structure (110) comprend des deuxièmes moyens de réception (140) destinés à recevoir des moyens optiques d'un dispositif lumineux pour un véhicule automobile.

3. Dispositif de guidage selon la revendication 2, **caractérisé en ce que** les deuxièmes moyens de réception (140) comprennent une ouverture formée dans une paroi de la structure (110).

4. Dispositif de guidage selon une des revendications 1 à 3, **caractérisé en ce que** la structure (110) comprend plusieurs parties.

5. Dispositif de guidage selon la revendication 4, **caractérisé en ce que** les parties s'étendent chacune le long d'une direction de guidage différente.

6. Dispositif de guidage selon une des revendications 1 à 5, **caractérisé en ce que** la structure (110) présente, le long des directions de guidage, une section transversale à profil généralement en forme de U, de L ou de T.

7. Dispositif de guidage selon la revendication 6, **caractérisé en ce que** les moyens de fixation (120) sont situées dans le fond du profil en U, de L ou de T.

8. Dispositif de guidage selon une des revendications 1 à 7, **caractérisé en ce que** les moyens de fixation comprennent des clips de fixation.

9. Dispositif de guidage selon une des revendications 1 à 8, **caractérisé en ce que** la structure rigide (110) comprend des moyens destinés à fixer le dispositif à une paroi interne d'un dispositif lumineux pour un véhicule automobile.

10. Dispositif lumineux pour un véhicule automobile comprenant une carte de circuit imprimé (10) et une pluralité de câbles électriques (20), **caractérisé en ce que** le dispositif comprend un dispositif de guidage (100) selon une des revendications 1 à 9, la carte de circuit imprimé étant logée dans les premiers moyens de réception (130) du dispositif de guidage et au moins un des câbles étant fixé à la structure rigide (110).

11. Dispositif lumineux selon la revendication 10, **caractérisé en ce qu'**au moins un des câbles fixés à la structure rigide (110) est relié électriquement à un circuit électronique supporté par la carte de circuit imprimé (10).

12. Dispositif lumineux selon une des revendications 10 ou 11, **caractérisé en ce que** la carte de circuit imprimé (10) comprend un circuit électronique ayant au moins une source lumineuse.

13. Dispositif lumineux selon la revendication 12, **caractérisé en ce que** le dispositif comprend des moyens optiques (30) destinés à guider les rayons lumineux émis par l'au moins une source lumineuse pour former un faisceau lumineux.

14. Dispositif lumineux selon la revendication 13, **caractérisé en ce que** les moyens optiques (30) sont reçus par les deuxièmes moyens de réception (140) de la structure rigide (110).

15. Dispositif lumineux selon la revendication 14, **caractérisé en ce que** les premiers moyens de réception (130) pour la carte de circuit imprimé (10) et les deuxièmes moyens de réception (140) pour les moyens optiques (30) sont disposés sur la structure rigide (110) de façon à ce que la lumière émise par au moins une source lumineuse de la carte de circuit imprimé peut être guidée par les moyens optiques.

16. Procédé d'assemblage d'un dispositif lumineux pour un véhicule automobile, **caractérisé en ce que** le procédé comprend les étapes de :
- mise à disposition d'un dispositif de guidage (100) selon une des revendications 1 à 9 ;
- fixation d'au moins un câble électrique (20) à la structure rigide (110) de manière à guider le câble le long d'une direction de guidage définie par la structure rigide (110) ;
- fixation d'une carte de circuit imprimé (10) à la structure rigide (110) à l'aide des premiers moyens de réception (130) ;
- montage du dispositif de guidage (100), y compris des câbles (20) et de la carte de circuit imprimé (10) fixés à celui-ci au sein du dispositif lumineux.

## Patentansprüche

1. Vorrichtung (100) zum Führen von mindestens einem Kabeln in einer Beleuchtungsvorrichtung für ein Kraftfahrzeug, wobei die Vorrichtung eine starre Struktur (110) umfasst, die sich entlang mindestens einer Führungsrichtung erstreckt und Befestigungsmittel (120) zur Befestigung des Kabels an der Struktur umfasst, wobei die Struktur (110) erste Aufnahmemittel (130) zur Aufnahme einer Leiterplatte umfasst, und
die erste Aufnahmemittel (130) mindestens einen in der Struktur (110) definierten Schlitz (132) aufweist, wobei der Schlitz eine Breite hat, die der Dicke der Leiterplatte darin angepasst ist.

2. Vorrichtung nach Anspruch 1, **dadurch gekennzeichnet, dass** die Struktur (110) zweite Aufnahmemittel (140) zur Aufnahme von optischen Mitteln einer Beleuchtungseinrichtung für ein Kraftfahrzeug umfasst.

3. Vorrichtung nach Anspruch 2, **dadurch gekennzeichnet, dass** das zweite Aufnahmemittel (140) eine in einer Wand der Struktur (110) ausgebildete Öffnung umfasst.

4. Vorrichtung nach einem der Ansprüche 1 bis 3, **dadurch gekennzeichnet, dass** die Struktur (110) aus mehreren Teilen besteht.

5. Vorrichtung nach Anspruch 4, **dadurch gekennzeichnet, dass** die Teile sich jeweils in eine andere Führungsrichtung erstrecken.

6. Vorrichtung nach einem der Ansprüche 1 bis 5, **dadurch gekennzeichnet, dass** die Struktur (110) einen Querschnitt mit einem allgemein U-förmigen, L-förmigen oder T-förmigen Profil entlang der Führungsrichtungen aufweist.

7. Vorrichtung nach Anspruch 6, **dadurch gekennzeichnet, dass** die Befestigungsmittel (120) im Boden des U-Profils, L-Profils oder T-Profils angeordnet sind.

8. Vorrichtung nach einem der Ansprüche 1 bis 7, **dadurch gekennzeichnet, dass** die Befestigungsmittel aus Befestigungsklammern bestehen.

9. Vorrichtung nach einem der Ansprüche 1 bis 8, **dadurch gekennzeichnet, dass** die starre Struktur (110) Mittel zur Befestigung der Vorrichtung an einer Innenwand einer Beleuchtungseinrichtung für ein Kraftfahrzeug umfasst.

10. Beleuchtungseinrichtung für ein Kraftfahrzeug mit einer Leiterplatte (10) und mehreren elektrischen Kabeln (20), **dadurch gekennzeichnet, dass** die Einrichtung eine Vorrichtung (100) zum Führen nach einem der Ansprüche 1 bis 9 umfasst, wobei die Leiterplatte in ersten Aufnahmemitteln (130) der Vorrichtung (100) untergebracht ist und mindestens eines der Kabel an der starren Struktur (110) befestigt ist.

11. Beleuchtungseinrichtung nach Anspruch 10, **dadurch gekennzeichnet, dass** mindestens eines der an der starren Struktur (110) befestigten Kabel elektrisch mit einer von der Leiterplatte (10) getragenen elektronischen Schaltung verbunden ist.

12. Beleuchtungseinrichtung nach einem der Ansprüche 10 oder 11, **dadurch gekennzeichnet, dass** die Leiterplatte (10) eine elektronische Schaltung mit mindestens einer Lichtquelle umfasst.

13. Beleuchtungseinrichtung nach Anspruch 12, **dadurch gekennzeichnet, dass** die Einrichtung optische Mittel (30) zur Führung der von der mindestens einen Lichtquelle emittierten Lichtstrahlen zur Bildung eines Lichtstrahls umfasst.

14. Beleuchtungseinrichtung nach Anspruch 13, **dadurch gekennzeichnet, dass** die optischen Mittel (30) von dem zweiten Aufnahmemittel (140) der starren Struktur (110) aufgenommen werden.

15. Beleuchtungseinrichtung nach Anspruch 14, **dadurch gekennzeichnet, dass** die ersten Aufnahmemittel (130) für die Leiterplatte (10) und die zweiten Aufnahmemittel (140) für die optischen Mittel (30) auf der starren Struktur (110) so angeordnet sind, dass das von mindestens einer Lichtquelle auf der Leiterplatte ausgesandte Licht durch die optischen Mittel geführt werden kann.

16. Verfahren zum Zusammenbau einer Beleuchtungseinrichtung für ein Kraftfahrzeug, **dadurch gekennzeichnet, dass** das Verfahren die folgenden Schritte umfasst: :
- Bereitstellung einer Vorrichtung (100) zum Führen gemäß einem der Ansprüche 1 bis 9;
- Befestigung mindestens eines elektrischen Kabels (20) an der starren Struktur (110), um das Kabel entlang einer durch die starre Struktur (110) definierten Führungsrichtung zu führen;
- Befestigung einer Leiterplatte (10) an der starren Struktur (110) mit Hilfe von ersten Aufnahmemitteln (130) ;
- Montage der Vorrichtung (100) zum Führen, einschließlich der Kabel (20) und der daran befestigten Leiterplatte (10) innerhalb der Beleuchtungseinrichtung.

## Claims

1. A guiding device (100) for guiding at least one cable in a lighting device for a motor vehicle, said guiding device comprising a rigid structure (110) extending along at least one guiding direction and comprising fixing means (120) for fixing the cable to the structure,
the structure (110) comprising first receiving means (130) for receiving a printed circuit board, and
the first receiving means (130) comprising at least one slot (132) defined in the structure (110), the slot having a width adapted to accommodate the thickness of the printed circuit board therein.

2. A guiding device according to claim 1, **characterized in that** the structure (110) comprises second receiving means (140) for receiving optical means of a light device for a motor vehicle.

3. A guiding device according to claim 2, **characterized in that** the second receiving means (140) comprises an opening formed in a wall of the structure (110).

4. A guiding device according to one of claims 1 to 3, **characterized in that** the structure (110) comprises several parts.

5. A guiding device according to claim 4, **characterized in that** the parts each extend along a different guiding direction.

6. A guiding device according to one of claims 1 to 5, **characterized in that** the structure (110) has a cross-section with a generally U-shaped, L-shaped or T-shaped profile along the guiding directions.

7. A guiding device according to claim 6, **characterized in that** the fastening means (120) are located in the bottom of the U-profile, L-profile or T-profile.

8. A guiding device according to one of claims 1 to 7, **characterized in that** the fastening means comprise fastening clips.

9. A guiding device according to one of claims 1 to 8, **characterized in that** the rigid structure (110) comprises means for fixing the device to an inner wall of a luminous device for a motor vehicle.

10. A luminous device for a motor vehicle comprising a printed circuit board (10) and a plurality of electric cables (20), **characterized in that** the device comprises a guiding device (100) according to one of claims 1 to 9, the printed circuit board being housed in first receiving means (130) of the guiding device and at least one of the cables being fixed to the rigid structure (110).

11. A luminous device according to claim 10, **characterized in that** at least one of the cables attached to the rigid structure (110) is electrically connected to an electronic circuit supported by the printed circuit board (10).

12. A luminous device according to one of claims 10 or 11, **characterized in that** the printed circuit board (10) comprises an electronic circuit having at least one light source.

13. A luminous device according to claim 12, **characterized in that** the device comprises optical means (30) for guiding the light rays emitted by the at least one light source to form a light beam.

14. A luminous device according to claim 13, **characterized in that** the optical means (30) are received by the second receiving means (140) of the rigid structure (110).

15. A luminous device according to claim 14, **characterized in that** the first receiving means (130) for the printed circuit board (10) and the second receiving means (140) for the optical means (30) are arranged on the rigid structure (110) in such a way that the light emitted by at least one light source on the printed circuit board can be guided by the optical means.

16. A method of assembling a luminous device for a motor vehicle, **characterized in that** the method comprises the steps of :
- providing of a guiding device (100) according to one of claims 1 to 9;
- fixing at least one electric cable (20) to the rigid structure (110) so as to guide the cable along a guiding direction defined by the rigid structure (110) ;
- fixing a printed circuit board (10) to the rigid structure (110) using first receiving means (130) ;
- mounting of the guiding device (100), including cables (20) and the printed circuit board (10) attached thereto within the luminous device.
